# EUROPEAN PATENT APPLICATION

(11) **EP 3 379 765 A1**
(43) Date of publication of application: **26.09.2018**
(21) Application number: 17305332.3
(22) Date of filing: 23.03.2017
(51) Int. Cl.: H04L 9/00, G06F 7/58

(54) **PERMUTATION GENERATION**

(71) Applicant: GEMALTO SA, 92190 Meudon (FR)
(72) Inventor: ADJEDJ, Michael, 92190 Meudon (FR); MINETTE DE SAINT-MARTIN, Xavier, 92190 Meudon (FR); VIENNE, Nicolas, 92190 Meudon (FR)
(74) Representative: Bricks, Amélie

(57) **Abstract**

The present invention relates to a permutation generator circuit comprising :
- a first memory storing an input vector of N input numbers, N being a first integer value, and a second integer value STEP coprime with a third integer value M;
- a first processor and an output circuit configured to output input numbers one by one,
and wherein:
- said first processor is configured to select at least one of the input numbers located at the input vector indexes START + i * STEP modulo M, with i an integer in {0, 1, ..., K-1}, START a first random integer value between 0 and N-1 and K a fourth integer value,
- and said permutation generator circuit is configured to iteratively, until each input number has been output once:
- either make the output circuit output the input number located at a current input vector index START + i * STEP modulo M, with i>=K,
-or make the output circuit output one of the selected input numbers, and select the input number located at the current input vector index as selected input number for the next iterations

## Description

### FIELD OF THE INVENTION

The present invention relates to the field of permutation generation and of associated permutation generator devices, and more particularly to a permutation generator circuit allowing to randomize the execution order of operations by generating a permutation.

### BACKGROUND OF THE INVENTION

In the field of software security, it is often desirable to randomize the order of execution of at least some operations, in order to prevent an attacker from gaining knowledge about the performed operations based on their execution duration. For example cryptographic keys to be used in cryptographic applications are often stored in encrypted form and any application wishing to use them must first load them into the RAM memory and decipher them. Deciphering the keys or key parts in a random order prevents any attacker from gaining knowledge on any specific key when spying on key loading and deciphering operations since he does not know at any time which key or key part is being loaded and deciphered.

Similarly it may be desirable to randomly alter tables storing sensitive data in order to prevent an attacker from easily gaining knowledge of such data by spying on multiple executions of an application accessing such data. For example randomly modifying the index of a look-up table (LUT) corresponding to a given input data after this input has been provided by an application enables to prevent an attacker from knowing that two different executions of an application accessed the same data in the array. In another example, not only the indices of input data of a LUT can be modified but also the location in the LUT of the values corresponding to these input data.

Such a randomization of an execution order of operations or of structures storing data may be performed based on permutations of arrays specifying such an order of execution or an order in which data are stored in such a structure.
A well-known permutation generator is Fisher-Yates generator which generates a randomly permuted array based on an input array by first initializing an output array as a copy of the input array and then by randomly permuting indexes of the output array. Such a generator has two major drawbacks: it has a memory footprint has large as the size of the input vector, for storing the output array all along the permutation generation process, and it makes as many calls to a pseudorandom number generator (PRNG) as the size of the input vector, for permuting indexes of the output array, leading to an important CPU footprint.

Consequently, in order to enhance the security of operations of an application or of a data storage structure accessed by such an application, there is a need for a method of randomization of the order of execution of such operations or of randomization of such a data storage structure, based on a permutation generation, and for an associated permutation generator, with a lower memory and CPU footprint than existing generators.

### SUMMARY OF THE INVENTION

For this purpose and according to a first aspect, this invention therefore relates to a permutation generator circuit comprising :
- a first memory storing an input vector of N input numbers, N being a first integer value, and a second integer value STEP coprime with a third integer value M;
- a first processor and an output circuit configured to output input numbers one by one,
and wherein:
- said first processor is configured to select at least one of the input numbers located at the input vector indexes START + i * STEP modulo M, with i an integer in {0, 1, ..., K-1}, START a first random integer value between 0 and N-1 and K a fourth integer value,
- and said permutation generator circuit is configured to iteratively, until each input number has been output once:
   - either make the output circuit output the input number located at a current input vector index START + i * STEP modulo M, with i>=K,
   - or make the output circuit output one of the selected input numbers, and select the input number located at the current input vector index as selected input number for the next iterations

Such a permutation generator circuit is capable of outputting input numbers in a randomized order, with a low memory footprint since only a few values (START, STEP...) need to be memorized in addition to the input vector. Particularly, no output vector gathering the outputted numbers is memorized.

Such a permutation generator circuit may be configured to output one by one said input numbers in their original order by applying a reverse permutation to the numbers outputted by said output circuit.

It enables using the same circuit to reverse the permutation applied to the input numbers of the input vector and to retrieve the original order of the input numbers, which may be mandatory for applications using the permuted order of the input numbers as a temporary protection, such as obfuscation techniques.

Said third integer value M may be equal to a power of 2 greater than or equal to N.

Said third integer value M may be equal to a prime number greater than or equal to N.

Such conditions ensure that no input number will be outputted twice before all the other ones have been outputted once.

In a first embodiment, the permutation generator circuit of the first aspect may further comprise a PRNG and, said fourth integer value K being equal to one :
- said PRNG is configured to generate a second random integer value COUNTER,
- said first processor is configured to select the input number located at the input vector index equal to said first random integer value START,
- said first processor is configured to initialize a fifth integer value LOOP to zero and is configured to iteratively until said second random integer value COUNTER is equal to 0 : increment said fifth integer value LOOP and decrement said second random integer value COUNTER,
- said permutation generator circuit is configured to, after each decrement of said second random integer value COUNTER by the first processor:
   - when said second random integer value COUNTER is not equal to 0, make the output circuit output the input number located at the current input vector index equal to START + LOOP * STEP modulo M,
   - when said second random integer value COUNTER is equal to 0, make the output circuit output the selected input number, select as selected input number for the next iterations the input number located at the current input vector index START + LOOP * STEP modulo M, and update the first random integer value START with the current input
   vector index START + LOOP * STEP modulo M,
and said permutation generator circuit is configured to output input numbers until each input number has been output once, by iteratively: operating the PRNG and, until said second random integer value COUNTER is equal to 0, operating the first processor and the output circuit to output numbers of said vector.

Such a configuration enables to make the output process of the numbers even more random, using random COUNTER values, while having a limited computation footprint, the PRNG being called only after COUNTER value gets equal to zero.

In a second embodiment, the permutation generator circuit of the first aspect may further comprise a PRNG, and said fourth integer value K being greater than one :
- said permutation generator circuit is configured to store in a first array RETAINING_VALUE of length K, the selected input numbers located at the input vector indexes START + i * STEP modulo M and is further configured to make the PRNG generate for each stored selected input number an associated third random integer value COUNTER and to store said third random integer values in a second array RETAINING_TIME of length K,
- said first processor is configured to initialize a fifth integer value LOOP to K-1 and is configured to iteratively until each input number has been output once: increment said fifth integer value LOOP and decrement all third random integer values COUNTER stored in the second array RETAINING_TIME,
- said permutation generator circuit is configured to, after each decrement of third random integer values COUNTER by the first processor:
   - when no third random integer values is equal to 0, make the output circuit output the input number located at the current input vector index START + LOOP * STEP modulo M
   - when at least one third random integer value COUNTER is equal to 0:
      - for each third random integer value COUNTER equal to 0, swap the selected input number in said first array RETAINING_VALUE associated with said third random integer value COUNTER equal to 0, with the input number located at the current input vector index START + LOOP * STEP modulo M, as new selected input number, make the PRNG generate for the new selected input number an associated new third random integer value COUNTER and store said new third random integer value in the second array RETAINING_TIME,
      - make the output circuit output the input number located at the current input vector index START + LOOP * STEP modulo M.

Such an implementation enables to set aside several input numbers simultaneously making even more random the output order of the numbers from the input vector, while still having a limited memory and computational footprint.

According to a second aspect, this invention therefore relates also to a system comprising the permutation generator circuit according to the first aspect and a second processor configured to execute on-the-fly operations of a computer program in an order resulting of the numbers outputted by the permutation generator circuit or to randomize on-the-fly a data storage structure based on the numbers outputted by the permutation generator circuit.

The system of the second aspect may comprise also a second memory and the second processor may be configured to be connected to said second memory and to execute on-the-fly operations for loading or decrypting key parts stored in said second memory in a randomized order resulting of the outputted numbers by the permutation generator circuit.

The system of the second aspect may comprise also a second memory and the second processor may be configured to be connected to said second memory and to execute on-the-fly code sections stored in said second memory in a randomized order resulting of the outputted numbers by the permutation generator circuit.

The system of the second aspect may comprise also a second memory and the second processor may be configured to be connected to said second memory and to randomly shuffle on-the-fly indices or values of a look-up table stored in said second memory based on the outputted numbers by the permutation generator circuit.

Such a system enables to make more secure the randomized operations or data structure by making it impossible for an attacker to understand or predict which key part is loaded, which data is accessed in a LUT and so on.

According to a third aspect, this invention therefore relates also to a method for generating a permutation performed by a permutation generator circuit comprising a first memory, a first processor and an output circuit and said method comprising:
- storing by the first memory an input vector of N input numbers, N being a first integer value, and a second integer value STEP coprime with a third integer value M;
- selecting by the first processor at least one of the input numbers located at the input vector indexes START + i * STEP modulo M, with i an integer in {0, 1, ... , K-1}, START a first random integer value between 0 and N-1 and K a fourth integer value,
- the following steps performed iteratively by the permutation generator circuit until each input number has been output once:
   - either making the output circuit output the input number located at a current input vector index START + i * STEP modulo M, with i>=K,
   - or making the output circuit output one of the selected input numbers, and select the input number located at the current input vector index as selected input number for the next iterations

According to a fourth aspect, this invention therefore relates also to a method for a randomized loading or decryption of key parts stored in a second memory by a system comprising the permutation generator circuit according to the first aspect and a second processor connected to said second memory, said method comprising executing by the second processor on-the-fly operations for loading or decrypting said key parts stored in said second memory in a randomized order resulting of numbers outputted by said permutation generator circuit according to the method of the third aspect.

According to a fifth aspect, this invention therefore relates also to a method for a randomized execution of code sections stored in a second memory by a system comprising the permutation generator circuit according to the first aspect and a second processor connected to said second memory, said method comprising executing on-the-fly by the second processor said code sections stored in said second memory in a randomized order resulting of numbers outputted by said permutation generator circuit according to the method of the third aspect.

According to a sixth aspect, this invention therefore relates also to a method for randomizing a look-up table stored in a second memory by a system comprising the permutation generator circuit according to the first aspect and a second processor connected to said second memory, said method comprising randomly shuffling on-the-fly indices or values of said look-up table stored in said second memory by the second processor based on the numbers outputted by said permutation generator circuit according to the method of the third aspect.

According to a seventh aspect, this invention therefore relates also to a computer program product directly loadable into the memory of at least one computer, comprising software code instructions for performing the steps of the third aspect when said product is run on the computer.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an implementation of an embodiment of the present invention;
- Figure 2 is a schematic illustration of a system according to an embodiment of the present invention;
- Figure 3 illustrates schematically a method for generating a permutation according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

The invention aims at randomizing the order of computer operations or a data structure, such as a look-up table (LUT), by generating a permutation of the order of said operations or a permutation of indices or values of such a LUT. Starting from a given input vector, comprising identifiers of operations to be performed or values stored in a LUT in a specific order, outputting a complete permutation specifying a new order of all the elements of the input vector requires a memory space at least twice as large as the one needed for storing the input vector itself, as illustrated here before in the case of Fischer-Yates permutation generator.

Let us consider an input vector of length N comprising N input numbers, said input numbers being either actual values to be randomized (such as identifiers of operations to be performed) or positions (0, 1, 2, ...) of such actual values in an array storing such actual values. In order to reduce the memory footprint of a randomization of this input vector, the proposed solution is to perform such a randomization using the output of a permutation generator circuit that, from said an input vector of input numbers, outputs one by one input numbers from the input vector in a pseudorandom order. As described hereunder, the permutation generator circuit is configured to output such numbers without any repetition, until all inputs numbers of the input vector have been outputted. In the end, the collection of outputted numbers forms a permutation of the input vector but the permutation generator circuit does not store, apart from the input vector, the outputted numbers, and therefore never stores in memory a permuted vector that would be the result of applying the generated permutation to the input vector, not even partially, unlike generators such as Fischer-Yates generator.

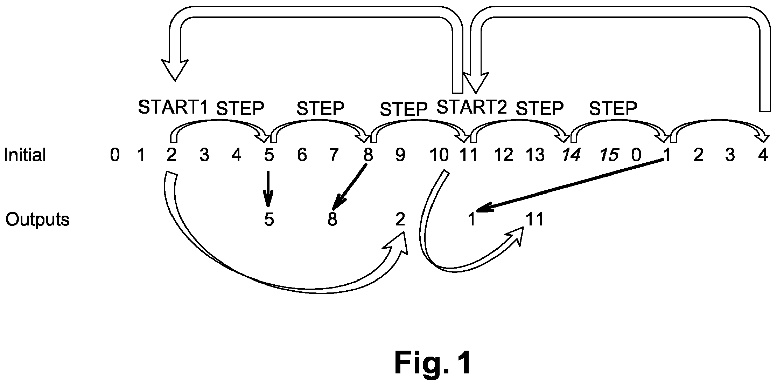

In order to do so, as depicted on Figure 1, the permutation generator circuit is configured to select randomly a START position in the input vector and from that START position to output one by one input numbers of the input vector located at START + i * STEP positions in the input vector. In order to make the output order more random, before outputting a first input number, the permutation generator circuit sets aside at least the input number at the START position, and then sometimes in the course of the process of outputting numbers, the permutation generator circuit, instead of outputting a number located at the next START + i*STEP position, sets this number aside and outputs instead a number previously set aside. By doing so any regular pattern in the order of the outputted numbers is broken.

An example is given on Figure 1 in which the input vector is (0, 1, ..., 13), START is equal to 2 and STEP is equal to 3. The value 2 at the START position is set aside. Then the numbers at the positions START +STEP (=5) and START+2*STEP (=8) are outputted. Then the value at START+3*STEP (=11) should be outputted but instead the value 2 previously set aside is outputted and 11 is set aside.

### System

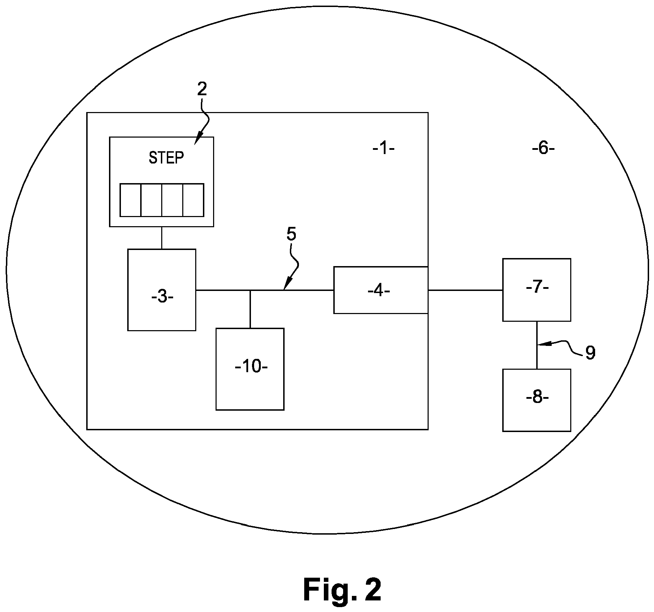

As depicted on **Figure 2****,** the permutation generator circuit 1 comprises a first memory 2. Such a first memory may be a volatile memory such as a RAM memory or a non-volatile memory such as an EEPROM, flash memory or a hard drive.

The permutation generator circuit 1 also includes a first processor 3 and an output circuit 4. The first memory 2, the first processor 3 and the output circuit 4 may be interconnected through an internal communication bus 5.

The output circuit is configured to output one by one the input numbers from the input vectors to be outputted by the permutation generator circuit.

The invention also relates to a system 6 performing operations in a randomized order or randomizing a data structure based on the numbers outputted by the output circuit of the permutation generator circuit 1. The system 6 may include at least the permutation generator circuit 1, a second processor 7 and a second memory 8, which may be interconnected by a second communication bus 9 in a first embodiment as illustrated on figure 2. Alternatively, the first processor 3 and the second processor 7 may be a single processor, and/or the first memory 2 and the second memory 8 may be a single memory, used both by the permutation generator circuit for outputting numbers and for the other operations to be performed by the system 6.

The second processor may be configured to execute on-the-fly operations of a computer program in an order resulting of the numbers outputted by the permutation generator circuit or to randomize on-the-fly a data storage structure based on the numbers outputted by the permutation generator circuit.
The expression "on-the-fly" is used to describe a continuous execution of operations as numbers get outputted one by one by the permutation generator circuit. Knowing the permuted order of all the numbers included in the input vector before performing some operations in a randomized order is not required. For example after each output of a number by the permutation generator circuit, an operation can be selected based on the number outputted and immediately performed. As a result storing the whole permutation generated by the permutation generator circuit is not required either, enabling a lower memory consumption compared to existing algorithms described here above.

As a first example, such operations to be randomized may be related to secret key management. In that case the second processor 7 may be configured to execute on-the-fly operations for loading or decrypting key parts stored in the second memory 8 in a randomized order resulting of the outputted numbers by the permutation generator circuit 1. Randomizing the order of processing of such key parts makes it much more difficult for an attacker to find the global secret key based on such operations on key parts.

As a second example, such operations to be randomized may be related to the execution of a source code or compiled code comprising several code sections stored in the second memory 8. In that case the second processor 7 may be configured to execute on-the-fly code sections stored in said second memory 8 in a randomized order resulting of the outputted numbers by the permutation generator circuit 1.

As a third example, in order to randomize on-the-fly a data storage structure, the second processor 7 may be configured to randomly shuffle on-the-fly indices or values of a look-up table stored in the second memory 8 based on the outputted numbers by the permutation generator circuit 1.

The following paragraphs describe with more details the configuration of the permutation generator circuit 1.

The first memory 2 stores an input vector of N input numbers, N being a first integer value. The first memory 2 also stores a second integer value STEP. As briefly explained hereabove, and as will be more apparent here after, the second integer value STEP represents the index delta in the input vector of two input numbers successively processed (either outputted or set aside) by the permutation generator circuit 1.

As explained here above the permutation generator circuit 1 shall set aside some of the input numbers of the input vector before starting to output numbers. In order to do so, the first processor 3 is further configured to select at least one of the input numbers located at the input vector indexes START + i * STEP modulo M, with M a third integer value, K a fourth integer value, i an integer in {0, 1, ..., K-1} and START a first random integer value between 0 and N-1. The fourth integer value K represents the number of input numbers simultaneously set aside by the permutation generator circuit and can also be called the order of the permutation generator circuit.

The second integer value STEP and the third integer value M are chosen in order to ensure that START + i * STEP modulo M cannot have two identical values even for large values of STEP and i. In a first embodiment, said third integer value M is equal to a power of 2 greater than or equal to N, for example the smallest power of 2 greater than or equal to N. In a second embodiment, said third integer value M is equal to a prime number greater than or equal to N. In both cases, STEP may be selected as coprime with the third integer value M.

Of course, such a solution using integer values for the first random integer value START, the first integer value N, the second integer value STEP, the third integer value M and the fourth integer value K is not limitative. The described system, devices and method may as well use other types of numbers such as floats or complex numbers for these values, and use an adapted processing determining the number and location of the input numbers to be selected.

After such an initial selection of one or more numbers to be set aside, in order to output numbers of the input vector, the permutation generator circuit 1 is configured to iteratively, until each input number has been output once:
- either make the output circuit 4 output the input number located at a current input vector index START + i * STEP modulo M, with i>=K,
- or make the output circuit 4 output one of the selected input numbers, and select the input number located at the current input vector index as selected input number for the next iterations.

Said otherwise, at each iteration, starting from the input vector index START + K-1 * STEP, the first processor 3 may move a pointer STEP positions forward (modulo M) in the input vector. The position reached is called the current input vector index. Then the first processor reads the input number located in the input vector at the current input vector index and either sends it to the output circuit 4, or sets it aside and sends instead to the output circuit 4 one of the numbers previously set aside.

By doing so, numbers are outputted one by one in a randomized order with a memory footprint much lower than the one of existing solutions generating and memorizing a whole permuted vector. It is also safer since the permuted vector is never stored in the memory of the permutation generator circuit, and therefore not accessible to an attacker.

The selection of the second integer value STEP and the third integer value M described here above, including a co-primality condition, ensures that after enough iterations the pointer has pointed to each input vector index without pointing two times to the same index. It ensures that the output circuit 4 will never output two times the same input number from the input vector and will have in the end outputted a real permuted image of the original input vector.

In some cases the selected value for M may be larger than the actual number of input numbers in the input vector, i.e. the input vector size. It may then occur for some value of i that input_vector_size < START + i*STEP < M. In such a case, in the input vector there is no input number at an index START + i*STEP modulo M. In that case the permutation generator circuit is configured such that no number is outputted by the output circuit for this iteration and i is further increased for the next iteration. An example is given in Figure 1 in which M=16. After having outputted the value 2 instead of the value 11, which is set aside, the current input vector index gets equal to 14. Since the positions in the input vector only range from 0 to 13, there is no number at a 14^{th} position of the input vector. The first processor then moves 3 (=STEP) positions forward, modulo 16 and the current input vector index gets equal to 1, which is outputted.

As an option, the permutation generator circuit may count the number of outputs by the output circuit. When the number of outputs already performed from a given input vector is equal to (S - K) with S the size of the input vector, it means that all input numbers have been outputted except the ones still set aside. Consequently when the number of outputs already performed from a given input vector reaches (S - K), the permutation generator circuit may then stop increasing i and output one by one all the remaining selected input numbers.

As described here above, the first processor 3 is configured to select input numbers of the input vector in order to mark it as set aside. Such a selection can be performed in at least two ways :
- when selecting an input number, the first processor may memorize the position in the input vector of the selected input number. If several numbers shall be marked as set aside simultaneously, the selected input numbers may be memorized in a dedicated array whose size may be equal to the number of selected input numbers. In such a case, when a selected input number shall be outputted by the output circuit, the first processor shall use the memorized position of the number to be outputted for reading the value of the input number in the input vector;
- alternatively, the first processor may memorize the value itself of the selected input numbers, possibly in an array if several numbers shall be marked as set aside simultaneously.

The following paragraphs give a detailed description of two possible embodiments for the permutation generation circuit.

### First embodiment

In a first embodiment, said fourth integer value K is equal to one. In such a case only one input number shall be set aside (aka selected or memorized) at each time.

The permutation generator circuit 1 further comprises a pseudorandom number generator PRNG 10.

In this first embodiment, the PRNG 10 is configured to generate a second random integer value COUNTER. Such a counter may be used as a countdown in order to determine when the output circuit shall output a previously set aside number instead of the input number at the current input vector index. In the figure 1, the second random integer value COUNTER is initialized to 3.

The first processor 3 is configured to select the input number located at the input vector index equal to START + i * STEP modulo M, with i an integer in {0, 1, ..., K-1}. In this first embodiment, since K=1, i=0 and the first processor 3 is configured to only select the input number located at the input vector index equal to said first random integer value START. In the figure 1, the first random integer value START is initialized to 2 and the input number located at the START position and equal to 2 is selected.

Said first processor is also configured to initialize a fifth integer value LOOP to zero and to iteratively until said second random integer value COUNTER is equal to 0 : increment said fifth integer value LOOP and decrement said second random integer value COUNTER. Such a LOOP value counts the number of iterations since the last initialization of the COUNTER value.

Said permutation generator circuit 1 is configured to, after each decrement of said second random integer value COUNTER by the first processor 3:
- when said second random integer value COUNTER is not equal to 0, make the output circuit 4 output the input number located at the current input vector index equal to START + LOOP * STEP modulo M;
- when said second random integer value COUNTER is equal to 0, make the output circuit 4 output the selected input number, select as selected input number for the next iterations the input number located at the current input vector index START + LOOP * STEP modulo M, and update the first random integer value START with the current input vector index START + LOOP * STEP modulo M.
Otherwise said, input numbers at the positions START + LOOP * STEP modulo M in the input vector are outputted for several increasing values of LOOP until the COUNTER countdown falls down to 0. At that time the input number previously set aside is outputted instead of the value at the current START + LOOP * STEP modulo M which is set aside, as a replacement for the outputted number.

For example in figure 1, the output circuit 4 outputs the number 5 for LOOP = 1 and COUNTER = 2, and then outputs the number 8 for LOOP = 2 and COUNTER = 1. Then at the third jump when LOOP = 3, said second random integer value COUNTER gets equal to 0 and the output circuit 4 outputs the previously selected input number 2 located at the first random integer value START = 2; then the first processor 3 selects the input number currently pointed at by updating the first random integer value START with the current input vector index "11 ".

Said permutation generator circuit 1 is configured to output input numbers until each input number has been output once, by iteratively: operating the PRNG 10 and, until said second random integer value COUNTER is equal to 0, operating the first processor 3 and the output circuit 4 to output numbers of said vector. Otherwise said, each time the COUNTER value falls down to zero, it is initialized again at a random value drawn by the PRNG. By doing so, the number of iterations performed between two outputs of a previously selected input number is variable, making it more complicated for an attacker to anticipate the output pattern of the permutation generator circuit.

In such an implementation, when selecting an input number consists in memorizing its position in the input vector, selecting the input number at the current input vector index START + LOOP * STEP modulo M and updating the first random integer value START with the current input vector index START + LOOP * STEP modulo M may be the same operation. Updating the first random integer value START indeed enables to memorize in it the position of the input number to be selected.

When selecting an input number consists in memorizing its value, in an alternate embodiment, the first random integer value START may never be updated and the fifth integer value LOOP accordingly never reset to zero after their first initialization. In that case it is indeed not needed to memorize the position of the input number set aside, by updating the first random integer value START.

### Second embodiment

In a second embodiment, said fourth integer value K is greater than one. In such a case several (K) input numbers shall be kept aside (aka selected or memorized) at each time, simultaneously.

In this second embodiment the permutation generator circuit 1 also comprises a pseudorandom number generator PRNG 10. The permutation generator circuit 1 is configured to store in a first array RETAINING_VALUE of length K, the selected input numbers located at the input vector indexes START + i * STEP modulo M. The permutation generator circuit 1 is further configured to make the PRNG generate for each stored selected input number an associated third random integer value COUNTER and to store said third random integer values in a second array RETAINING_TIME of length K. As in the first embodiment, such COUNTER values are countdowns used for determining when such numbers set aside shall be outputted.

Said first processor 3 is configured to initialize a fifth integer value LOOP to K-1 and is configured to iteratively until each input number has been output once: increment said fifth integer value LOOP and decrement all third random integer values COUNTER stored in the second array RETAINING_TIME.

Said permutation generator circuit 1 is configured to, after each decrement of third random integer values COUNTER by the first processor 3:
- when no third random integer values COUNTER is equal to 0, make the output circuit 4 output the input number located at the current input vector index START + LOOP * STEP modulo M,
- when at least one third random integer value COUNTER is equal to 0:
   - for each third random integer value COUNTER equal to 0, swap the selected input number in said first array RETAINING_VALUE associated with said third random integer value COUNTER equal to 0, with the input number located at the current input vector index START + LOOP * STEP modulo M, as new selected input number, make the PRNG 10 generate for the new selected input number an associated new third random integer value COUNTER and store said new third random integer value in the second array RETAINING_TIME,
   - make the output circuit 4 output the input number located at the current input vector index START + LOOP * STEP modulo M.

Otherwise said, each input number set aside has a COUNTER countdown value associated to it. Several COUNTER values may fall down to zero at the same time. In that case the swap step described here above is performed for each of the selected input numbers whose COUNTER fell down to zero. This leads to outputting only one selected input number, the last one to which the swap step is applied, and re-initializing the COUNTER value of all the other ones using the PRNG.

In such embodiments, the computational footprint is minimized compared to existing solutions by reducing the number of calls to the PRNG. It is needed only when a COUNTER value reaches zero, versus one call for each number output in existing solutions.

Depending on the capabilities of the permutation generator circuit 1, for example on the size of the first memory 2, the computational and memory footprint may be further reduced. For example the fourth integer value K may be limited below a maximum number compatible with the size of the first memory. Similarly, only one COUNTER countdown value may be used for all the numbers set aside and when this COUNTER value reaches zero, the selected input number to be swapped with the input number located at the current input vector index START + LOOP * STEP modulo M may be selected at random among all the input numbers set aside, or may be selected taking into account the order in which the input numbers were set aside in a LIFO or FIFO mode.

### Other aspects

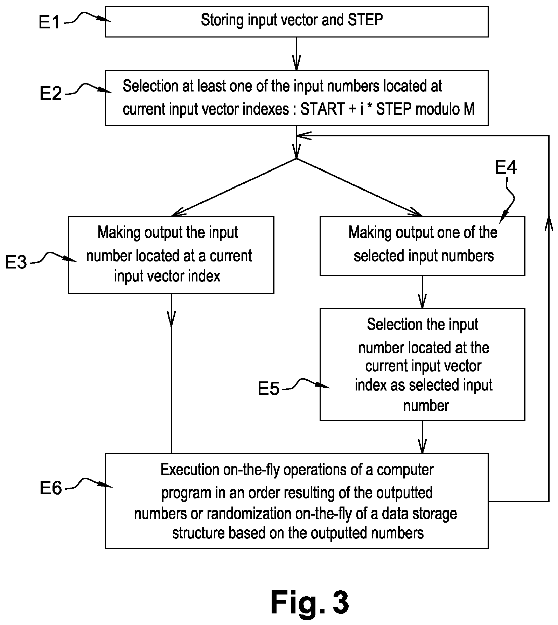

According to a second aspect, the invention relates to a method for generating a permutation performed by the permutation generator circuit 1 described above in order to generate a permutation of the input vector. Steps of such a method are described on **Figure 3****.**

Such a method may comprise a first step E1 wherein the first memory of the permutation generator circuit stores an input vector of N input numbers, N being a first integer value, and a second integer value STEP which may be coprime with a third integer value M.

The method performed by the permutation generator circuit for generating a permutation may then comprise a second step E2 wherein the first processor 3 selects at least one of the input numbers located at the input vector indexes START + i * STEP modulo M, with i an integer in {0, 1, ... , K-1}, START a first random integer value between 0 and N-1 and K a fourth integer value.

The method for generating a permutation may then comprise, the following steps performed iteratively by the permutation generator circuit until each input number has been output once:
- a third step E3 during which the first processor makes the output circuit output the input number located at a current input vector index START + i * STEP modulo M, with i>=K,
- and a fourth step E4 during which the first processor makes the output circuit output one of the selected input numbers,
- and a fifth step E5 during which the first processor selects the input number located at the current input vector index as selected input number for the next iterations.

During a sixth step E6, the second processor 7 may execute on-the-fly operations of a computer program in an order resulting of the numbers outputted by the permutation generator circuit 1 or to randomize on-the-fly a data storage structure based on the numbers outputted by the permutation generator circuit 1.

It is possible to output numbers one by one in their original order based on the permuted vector of the numbers outputted in a randomized order, i.e. to apply a reverse permutation to the numbers. Such a reverse permutation can be defined provided that it uses the same PRNG, using the same seed, as the one used when applying the steps of the method described above for generating the permuted vector.

According to a third aspect, the invention relates to a method for a randomized loading or decryption of key parts stored in a second memory by the system 6 described above comprising the permutation generator circuit and the second processor 7 connected to said second memory 8, said method comprising executing E6 by the second processor on-the-fly operations for loading or decrypting said key parts stored in said second memory in a randomized order resulting of numbers outputted by said permutation generator circuit according to the method of the second aspect.

According to a fourth aspect, the invention relates to a method for a randomized execution of code sections stored in a second memory 8 by the system 6 described above comprising the permutation generator circuit 1 and the second processor 7 connected to said second memory 8, said method comprising executing E6 on-the-fly by the second processor 7 said code sections stored in said second memory 8 in a randomized order resulting of numbers outputted by said permutation generator circuit 1 according to the method of the second aspect.

According to a fifth aspect, the invention relates to a method for randomizing a look-up table stored in a second memory 8 by the system 6 described above comprising the permutation generator circuit 1 and a second processor 7 connected to said second memory 8, said method comprising randomly shuffling E6 on-the-fly indices or values of said look-up table stored in said second memory 8 by the second processor 7 based on the numbers outputted by said permutation generator circuit 8 according to the method of the second aspect.

According to a sixth aspect, the invention relates to a computer program product directly loadable into the memory of at least one computer, comprising software code instructions for performing the steps of the method of the second aspect when said product is run on the computer.

Such a system, permutation generator circuit and methods enable to enhance the security of operations of an application or of a data storage structure accessed by such an application, by generating random permutations of an input vector and by using it to randomize the execution of operations such as loading key parts or to randomize data structures such as LUTs. It is performed with a minimal memory and computation footprint, much lower than existing solutions. Such a low footprint would enable to easily perform such a randomization on multiple input vectors at the same time, in parallel.

## Claims

1. A permutation generator circuit (1) comprising :
- a first memory (2) storing an input vector of N input numbers, N being a first integer value, and a second integer value STEP coprime with a third integer value M;
- a first processor (3) and an output circuit (4) configured to output input numbers one by one,
and wherein:
- said first processor is configured to select at least one of the input numbers located at the input vector indexes START + i * STEP modulo M, with i an integer in {0, 1, ..., K-1}, START a first random integer value between 0 and N-1 and K a fourth integer value,
- and said permutation generator circuit is configured to iteratively, until each input number has been output once:
- either make the output circuit (4) output the input number located at a current input vector index START + i * STEP modulo M, with i>=K,
- or make the output circuit output (4) one of the selected input numbers, and select the input number located at the current input vector index as selected input number for the next iterations

2. The permutation generator circuit of claim 1, configured to output one by one said input numbers in their original order by applying a reverse permutation to the numbers outputted by said output circuit.

3. The permutation generator circuit of claim 1, wherein said third integer value M is equal to a power of 2 greater than or equal to N.

4. The permutation generator circuit of claim 1, wherein said third integer value M is equal to a prime number greater than or equal to N.

5. The permutation generator circuit of claim 1 further comprising a PRNG, wherein said fourth integer value K is equal to one and wherein:
- said PRNG is configured to generate a second random integer value COUNTER,
- said first processor is configured to select the input number located at the input vector index equal to said first random integer value START,
- said first processor is configured to initialize a fifth integer value LOOP to zero and is configured to iteratively until said second random integer value COUNTER is equal to 0 : increment said fifth integer value LOOP and decrement said second random integer value COUNTER,
- said permutation generator circuit is configured to, after each decrement of said second random integer value COUNTER by the first processor:
- when said second random integer value COUNTER is not equal to 0, make the output circuit output the input number located at the current input vector index equal to START + LOOP * STEP modulo M,
- when said second random integer value COUNTER is equal to 0, make the output circuit output the selected input number, select as selected input number for the next iterations the input number located at the current input vector index START + LOOP * STEP modulo M, and update the first random integer value START with the current input vector index START + LOOP * STEP modulo M,
and wherein said permutation generator circuit is configured to output input numbers until each input number has been output once, by iteratively: operating the PRNG and, until said second random integer value COUNTER is equal to 0, operating the first processor and the output circuit to output numbers of said vector.

6. The permutation generator circuit of claim 1 further comprising a PRNG, wherein said fourth integer value K is greater than one and wherein:
- said permutation generator circuit is configured to store in a first array RETAINING_VALUE of length K, the selected input numbers located at the input vector indexes START + i * STEP modulo M and is further configured to make the PRNG generate for each stored selected input number an associated third random integer value COUNTER and to store said third random integer values in a second array RETAINING_TIME of length K,
- said first processor is configured to initialize a fifth integer value LOOP to K-1 and is configured to iteratively until each input number has been output once: increment said fifth integer value LOOP and decrement all third random integer values COUNTER stored in the second array RETAINING_TIME,
- said permutation generator circuit is configured to, after each decrement of third random integer values COUNTER by the first processor:
- when no third random integer values is equal to 0, make the output circuit output the input number located at the current input vector index START + LOOP * STEP modulo M,
- when at least one third random integer value COUNTER is equal to 0:
- for each third random integer value COUNTER equal to 0, swap the selected input number in said first array RETAINING_VALUE associated with said third random integer value COUNTER equal to 0, with the input number located at the current input vector index START + LOOP * STEP modulo M, as new selected input number, make the PRNG generate for the new selected input number an associated new third random integer value COUNTER and store said new third random integer value in the second array RETAINING_TIME,
- make the output circuit output the input number located at the current input vector index START + LOOP * STEP modulo M.

7. A system (6) comprising the permutation generator circuit (1) according to claim 1 and a second processor (7) configured to execute on-the-fly operations of a computer program in an order resulting of the numbers outputted by the permutation generator circuit or to randomize on-the-fly a data storage structure based on the numbers outputted by the permutation generator circuit (1).

8. The system of claim 7 comprising also a second memory (8) and wherein the second processor (7) is configured to be connected to said second memory and to execute on-the-fly operations for loading or decrypting key parts stored in said second memory in a randomized order resulting of the outputted numbers by the permutation generator circuit (1).

9. The system of claim 7 comprising also a second memory (8) and wherein the second processor (7) is configured to be connected to said second memory and to execute on-the-fly code sections stored in said second memory in a randomized order resulting of the outputted numbers by the permutation generator circuit (1).

10. The system of claim 7 comprising also a second memory (8) and wherein the second processor (7) is configured to be connected to said second memory and to randomly shuffle on-the-fly indices or values of a look-up table stored in said second memory based on the outputted numbers by the permutation generator circuit (1).

11. A method for generating a permutation performed by a permutation generator circuit (1) comprising a first memory (2), a first processor (3) and an output circuit (4) and said method comprising:
- storing (E1) by the first memory (2) an input vector of N input numbers, N being a first integer value, and a second integer value STEP coprime with a third integer value M;
- selecting (E2) by the first processor (3) at least one of the input numbers located at the input vector indexes START + i * STEP modulo M, with i an integer in {0, 1, ... , K-1}, START a first random integer value between 0 and N-1 and K a fourth integer value,
- the following steps performed iteratively by the permutation generator circuit (1) until each input number has been output once:
- either making (E3) the output circuit (4) output the input number located at a current input vector index START + i * STEP modulo M, with i>=K,
- or making (E4) the output circuit (4) output one of the selected input numbers, and select (E5) the input number located at the current input vector index as selected input number for the next iterations

12. A method for a randomized loading or decryption of key parts stored in a second memory (8) by a system (6) comprising the permutation generator circuit (1) according to claim 1 and a second processor (7) connected to said second memory, said method comprising executing (E6) by the second processor on-the-fly operations for loading or decrypting said key parts stored in said second memory in a randomized order resulting of numbers outputted by said permutation generator circuit according to the method of claim 11.

13. A method for a randomized execution of code sections stored in a second memory (8) by a system (6) comprising the permutation generator circuit (1) according to claim 1 and a second processor (7) connected to said second memory, said method comprising executing (E6) on-the-fly by the second processor said code sections stored in said second memory in a randomized order resulting of numbers outputted by said permutation generator circuit according to the method of claim 11.

14. A method for randomizing a look-up table stored in a second memory (8) by a system (6) comprising the permutation generator circuit (1) according to claim 1 and a second processor (7) connected to said second memory, said method comprising randomly shuffling (E6) on-the-fly indices or values of said look-up table stored in said second memory by the second processor based on the numbers outputted by said permutation generator circuit according to the method of claim 11.

15. A computer program product directly loadable into the memory of at least one computer, comprising software code instructions for performing the steps of claim 11 when said product is run on the computer.
